# EUROPÄISCHE PATENTANMELDUNG

(11) **EP 4 269 854 A1**
(43) Veröffentlichungstag der Anmeldung: **01.11.2023**
(21) Anmeldenummer: 23167960.6
(22) Anmeldetag: 14.04.2023
(51) Int. Cl.: F16L 33/207, F16L 13/02, F16L 13/10

(54) **FLUIDLEITUNGSVORRICHTUNG**

(30) Priorität: 29.04.2022 DE 102022204220
(71) Anmelder: ContiTech Techno-Chemie GmbH, 61184 Karben (DE)
(72) Erfinder: Daniel, Gunther, 30165 Hannover (DE)
(74) Vertreter: Continental Corporation

(57) **Zusammenfassung**

Die Erfindung betrifft eine Fluidleitungsvorrichtung (10) mit einer Fluidleitung (12), welche sich in Axialrichtung erstreckende Verstärkungselemente (14) und einen Leitungsmantel (16) umfasst, und zumindest einem mehrteiligen Verbindungsstück (22), welches ein fluidleitungsinternes Verbindungsteil (24) und ein fluidleitungsexternes Verbindungsteil (26) umfasst und das fluidleitungsexterne Verbindungsteil (26) mehrere in Axialrichtung voneinander beabstandet angeordnete Verpressglieder (28a-28f) aufweist, wobei der Leitungsmantel (16) der Fluidleitung (12) in einem Dichtabschnitt (30) der Fluidleitungsvorrichtung (10) über die auf die Verstärkungselemente (14) Druck ausübenden Verpressglieder (28a-28f) mittels einer Pressverbindung (38) mit dem fluidleitungsinternen Verbindungsteil (24) abdichtend verpresst ist.

## Beschreibung

Die Erfindung betrifft eine Fluidleitungsvorrichtung nach dem Oberbegriff des Patentanspruchs 1, ein Hochdrucktanksystem nach dem Oberbegriff des Patentanspruchs 6 und ein Verfahren zum Herstellen einer eine Fluidleitung und zumindest ein mehrteiliges Verbindungsstück umfassenden Fluidleitungsvorrichtung nach dem Oberbegriff des Patentanspruchs 7.

Fluidleitungen, wie beispielsweise Schlauchleitungen oder Rohrleitungen, sind häufig an zumindest einem Leitungsende mit Verbindungsstücken, sogenannten Fittings, ausgestattet. Mittels der Verbindungsstücke können Fluidleitungen an weitere Anbau- und Zubehörteile, beispielsweise an Behälter oder Armaturen, wie Ventile, sowie an andere Fluidleitungen montiert werden. Fluidleitungsvorrichtungen, also Fluidleitungen mit daran befestigten Verbindungsstücken, sind in der Praxis, beispielsweise bei der Verwendung in Hochdrucktanksystemen, hohen Betriebsinnendrücken durch das zu fördernde Fluid ausgesetzt. Fluidleitungen, welche hohen Betriebsinnendrücken ausgesetzt sind, werden daher üblicherweise durch Verstärkungselemente verstärkt, sodass sie den hohen Innendrücken im Betrieb standhalten. Zudem müssen die Verbindungsstücke so fest mit der Fluidleitung verbunden und an dieser befestigt sein, dass auch die Verbindung zwischen dem Verbindungsstück und der Fluidleitung den hohen Drücken standhält, sodass es weder zu Undichtigkeiten noch zu einem vollständigen Versagen der Verbindung des Verbindungsstücks mit der Fluidleitung kommt.

In der Praxis werden bisher Fluidleitungsvorrichtungen eingesetzt, bei welchen das Verbindungsstück mit der Fluidleitung verpresst ist. Um das Verbindungsstück mit der Fluidleitung zu verbinden, wird ein in die Fluidleitung eingeführter metallischer Nippel mit einer auf die Fluidleitung außen aufgesteckten metallischen Fassung verpresst, wobei die Fassung zahnartige Verpressglieder, welche in die Verstärkungselemente der Fluidleitung eingepresst werden, umfasst. Die Verpressglieder in der Fassung sollen die Verbindung zwischen der Fluidleitung und dem Verbindungsstück für hohe Drücke widerstandsfähig machen. Allerdings sorgen die zahnartigen Verpressglieder der Fassung in der Praxis häufig für Beschädigungen der Fluidleitung und insbesondere der Verstärkungselemente der Fluidleitung, sodass es im Betrieb der Fluidleitungsvorrichtung unter hohem Druck zu Undichtigkeiten an der Verbindungsstelle zwischen der Fluidleitung und dem Verbindungsstück oder im schlimmsten Fall sogar zu einem vollständigen Versagen, also einem Ausreißen des Verbindungsstücks aus der Fluidleitung, kommen kann.

Die der Erfindung zugrundeliegende Aufgabe besteht somit darin, die Festigkeit der Verbindung eines Verbindungsstücks mit einer Fluidleitung und somit die Robustheit sowie die Widerstandsfähigkeit von Fluidleitungsvorrichtungen beim Fördern von Fluiden bei hohen Betriebsdrücken zu erhöhen.

Die Aufgabe wird gelöst mit einer Fluidleitungsvorrichtung der eingangs genannten Art, wobei die Verstärkungselemente in einem Fügebereich der Fluidleitung mittels einer Fügeverbindung stoffschlüssig mit dem zumindest einen Verbindungsstück gefügt sind.

Dadurch, dass die Verstärkungselemente stoffschlüssig mit dem Verbindungsstück gefügt sind, wird die Festigkeit der Verbindung der Verstärkungselemente und somit der Fluidleitung mit dem Verbindungsstück so erhöht, dass sie den hohen Betriebsdrücken und den daraus resultierenden hohen Belastungskräften an der Verbindung zwischen der Fluidleitung dem Verbindungsstück standhält und somit Leckagen an der Verbindungsstelle oder ein vollständiges Versagen der Verbindung in Folge von Beschädigungen an der Verbindungsstelle vermieden werden. Somit wird die Betriebssicherheit der Fluidleitungsvorrichtung erhöht, da die Gefahr eines unbeabsichtigten Fluidaustritts minimiert wird.

Die Fluidleitung kann als Schlauch, beispielsweise aus einem Elastomer, oder als Rohr, beispielsweise aus Metall oder Kunststoff, ausgebildet sein. Die Fluidleitung kann starr oder flexibel sein. Die Fluidleitung ist vorzugsweise dazu eingerichtet, einen flüssigen und/oder gasförmigen Energieträger, insbesondere Wasserstoff, zu fördern. Die Fluidleitung ist vorzugsweise mehrschichtig aufgebaut. Die Fluidleitung umfasst vorzugsweise zumindest einen Leitungsmantel, bestehend aus einer fluidleitungsinneren Mantelschicht und einer fluidleitungsäußeren Mantelschicht. Der Leitungsmantel besteht vorzugsweise aus einem elastomeren Material. Der Leitungsmantel der Fluidleitung ist vorzugsweise mittels der Verstärkungselemente verstärkt. Die Verstärkungselemente können in das Leitungsmaterial der Fluidleitung eingebettet sein. Die Verstärkungselemente können eine Schicht der Fluidleitung bilden und/oder von dem Leitungsmantel eingeschlossen sein. Durch die die Fluidleitung verstärkenden Verstärkungselemente kann die Fluidleitung hohen Drücken des geförderten Fluids standhalten. Vorzugsweise hält die Fluidleitung Anwendungsdrücken von mindestens 750 bar und Berstdrücken von mindestens 3500 bar stand.

Das mehrteilige Verbindungsstück umfasst vorzugsweise zwei Verbindungsteile, welche fest miteinander verbunden sein können. Das fluidleitungsinterne Verbindungsteil ist vorzugsweise als Nippel ausgebildet und/oder radial innenliegend in der Fluidleitung positioniert. Das fluidleitungsexterne Verbindungsteil ist vorzugsweise als Fassung ausgebildet und/oder radial außenliegend an der Fluidleitung positioniert. Das fluidleitungsinterne Verbindungsteil und das fluidleitungsexterne Verbindungsteil sind vorzugsweise zumindest abschnittsweise zylindrisch ausgebildet. Die Verpressglieder des fluidleitungsexternen Verbindungsteils sind vorzugsweise umlaufende, beispielsweise ringförmige, Erhebungen des fluidleitungsexternen Verbindungsteils sein, welche beispielsweise in Umfangsrichtung beabstandet und/oder in Axialrichtung beabstandet voneinander angeordnet sein können. Die Verpressglieder des fluidleitungsexternen Verbindungsteils können beispielsweise als Widerhaken ausgebildet sein und/oder einen zahnförmigen Querschnitt aufweisen.

Der Leitungsmantel ist vorzugsweise abschnittsweise, insbesondere im Dichtabschnitt und im Fügebereich der Fluidleitungsvorrichtung, entfernt, sodass die Verstärkungselemente zumindest abschnittsweise freiliegen. Vorzugsweise ist im Dichtabschnitt nur die fluidleitungsäußere Mantelschicht entfernt. Vorzugsweise sind im Fügebbereich die fluidleitungsäußere Mantelschicht und die fluidleitungsinnere Mantelschicht entfernt.

In einer bevorzugten Ausführungsform der erfindungsgemäßen Fluidleitungsvorrichtung sind die Verstärkungselemente aus einem schweißbaren Werkstoff ausgebildet. Zudem ist die Fügeverbindung eine Schweißverbindung. Die Verstärkungselemente sind vorzugsweise aus einem metallischen Werkstoff, insbesondere aus Stahl, ausgebildet. Die Verstärkungselemente können als Drähte, Drahtgeflecht, Metallfilamente und/oder als Bänder ausgebildet sein. Durch die Pressverbindung weisen die Verstärkungselemente im Dichtabschnitt durch die Druck ausübenden Verpressglieder hervorgerufene Deformationen auf. Die Deformationen können beispielsweise teilweise oder vollständig umlaufende Einkerbungen in den Verstärkungselementen sein. Durch die Deformationen in den Verstärkungselementen ist die fluidleitungsinnere Mantelschicht mit dem fluidleitungsinternen Verbindungsteil verpresst, sodass ein durch die Fluidleitung gefördertes Fluid, beispielsweise ein Gas, auch bei hohen Drücken nicht austreten kann. Das mehrteilige Verbindungsstück ist zumindest abschnittsweise, insbesondere im Fügebereich, auch aus einem schweißbaren Werkstoff, beispielsweise aus Stahl, ausgebildet.

In einer weiteren bevorzugten Ausführungsform der erfindungsgemäßen Fluidleitungsvorrichtung sind die Verstärkungselemente aus Fasermaterial und/oder aus textilem Material oder aus Kunststoff ausgebildet. Zudem ist die Fügeverbindung eine Klebeverbindung. Das Fasermaterial kann Aramidfasern, Glasfasern und/oder Kohlefasern umfassen. Das Fasermaterial kann Kurz,- Lang- und/oder Endlosfasern umfassen. Das Fasermaterial kann ein Fasergeflecht, Fasergewirk und/oder ein Fasergestrick bilden. Das textile Material kann Fasern umfassen. Die Klebeverbindung wird vorzugsweise mittels eines Klebstoffes, insbesondere auf Acrylat- oder Epoxidharzbasis, hergestellt. Die Oberfläche des mehrteiligen Verbindungsstücks ist zumindest abschnittsweise, insbesondere im Fügebereich, für eine Klebeverbindung geeignet oder vorbereitet, beispielsweise durch eine aufgeraute Oberfläche oder durch eine Vorbehandlung mittels einer Primers.

Es ist ferner eine erfindungsgemäße Fluidleitungsvorrichtung bevorzugt, bei welcher die Fügeverbindung mehrere voneinander beabstandete und über den Umfang der Fluidleitung verteilte Fügepunkte umfasst. Die Fügepunkte können gleichmäßig oder ungleichmäßig über den Umfang der Fluidleitung verteilt sein. Die Fügepunkte können Schweißpunkte sein. Durch eine punktförmige Fügeverbindung wird der Wärmeeintrag in das zu schweißende Material sowie das umliegende Material an der Schweißverbindung minimiert, sodass insbesondere ein Leitungsmantel aus einem Elastomer nicht geschädigt wird. Die Fügeverbindung kann eine Laserschweiß-Verbindung sein. Das Verbindungsstück kann Ausnehmungen zum Schweißen, beispielsweise Bohrungen, aufweisen. Die Fügepunkte können alternativ Klebepunkte sein. Alternativ kann die Fügeverbindung eine umlaufende Schweißnaht oder eine umlaufende Klebeverbindung sein.

Darüber hinaus ist eine erfindungsgemäße Fluidleitungsvorrichtung vorteilhaft, bei welcher das fluidleitungsexterne Verbindungsteil zumindest ein Verpressglied im Fügebereich der Fluidleitungsvorrichtung aufweist, sodass im Fügebereich der Fluidleitungsvorrichtung gleichzeitig eine kraftschlüssige Pressverbindung und eine stoffschlüssige Verbindung vorliegt.

Die der Erfindung zugrundeliegende Aufgabe wird ferner durch ein Hochdrucktanksystem der eingangs genannten Art gelöst, wobei die Fluidleitungsvorrichtung nach einer der vorstehenden Ausführungsformen ausgebildet ist. Hinsichtlich der Vorteile und Modifikationen des erfindungsgemäßen Hochdrucktanksystems wird somit zunächst auf die Vorteile und Modifikationen der erfindungsgemäßen Fluidleitungsvorrichtung verwiesen.

Das Hochdrucktanksystem kann ein Wasserstofftanksystem sein, beispielsweise zur Betankung von wasserstoffbetriebenen Fahrzeugen oder zur Lagerung von Wasserstoff. Das Tankfluid kann Wasserstoff sein. Der Fluidtank kann ein Wasserstofftank sein.

Die der Erfindung zugrundeliegende Aufgabe wird ferner durch ein Verfahren der eingangs genannten Art gelöst, wobei das erfindungsgemäße Verfahren das stoffschlüssige Fügen von sich in Axialrichtung erstreckenden Verstärkungselementen der Fluidleitung in einem Fügebereich mit dem zumindest einen Verbindungsstück umfasst.

Mittels des erfindungsgemäßen Verfahrens wird vorzugsweise eine Fluidleitungsvorrichtung nach einer der vorstehend beschriebenen Ausführungsformen hergestellt. Hinsichtlich der Vorteile und Modifikationen des erfindungsgemäßen Verfahrens wird somit auch auf die Vorteile und Modifikationen der erfindungsgemäßen Fluidleitungsvorrichtung verwiesen.

In einer bevorzugten Ausführungsform des erfindungsgemäßen Verfahrens wird das Verpressen des Leitungsmantels der Fluidleitung mit dem fluidleitungsinternen Verbindungsteil und das stoffschlüssige Fügen der Verstärkungselemente mit dem Verbindungsstück zeitgleich oder nacheinander durchgeführt. Vorzugsweise erfolgen das Verpressen und das stoffschlüssige Fügen gemeinsam in einer Maschine.

In einer anderen bevorzugten Ausführungsform des erfindungsgemäßen Verfahrens erfolgt das stoffschlüssige Fügen mittels Schweißen und/oder Kleben. Das Schweißen wird vorzugsweise mittels einer Schweißvorrichtung durchgeführt. Ein Schweißkopf und/oder eine Schweiß-Elektrode der Schweißvorrichtung wird vorzugsweise durch eine Ausnehmung im Verbindungsstück der Fluidleitungsvorrichtung eingeführt. Der Schweißkopf und/oder die Schweiß-Elektrode kann aus radialer Richtung und/oder aus axialer Richtung und/oder aus schräger Richtung auf das Verbindungsstück gerichtet und/oder bewegt und/oder in die Ausnehmung eingeführt werden. Vorzugsweise erfolgt das Schweißen und/oder das Kleben vollautomatisiert, teilautomatisiert oder manuell. Das Kleben wird vorzugsweise mittels einer Klebevorrichtung durchgeführt. Eine Klebedüse der Klebevorrichtung kann aus radialer Richtung und/oder aus axialer Richtung und/oder aus schräger Richtung auf das Verbindungsstück gerichtet und/oder bewegt und/oder in die Ausnehmung des Verbindungsstücks eingeführt werden. Das Schweißen ist vorzugsweise Laserschweißen und/oder Punktschweißen. Durch das Laserschweißen und/oder Punktschweißen wird der Wärmeeintrag beim Schweißen minimiert und somit eine thermische Schädigung der Fluidleitungsvorrichtung vermieden.

Ferner ist ein erfindungsgemäßes Verfahren vorteilhaft, bei welchem die Verstärkungselemente der Fluidleitung beim stoffschlüssigen Fügen der Verstärkungselemente mit dem Verbindungsstück mit dem fluidleitungsinternen Verbindungsteil und/oder mit dem fluidleitungsexternen Verbindungsteil stoffschlüssig verbunden werden. Zum stoffschlüssigen Verbinden der Verstärkungselemente mit dem fluidleitungsinternen Verbindungsteil wird vorzugsweise der Schweißkopf und/oder die Schweiß-Elektrode und/oder die Klebedüse durch die Ausnehmung im Verbindungsstück eingeführt. Zum stoffschlüssigen Verbinden der Verstärkungselemente mit dem fluidleitungsexternen Verbindungsteil wird vorzugsweise der Schweißkopf und/oder die Schweiß-Elektrode und/oder die Klebedüse radial, axial oder schräg von außen auf das Verbindungsstück gerichtet und/oder bewegt. Zum stoffschlüssigen Verbinden der Verstärkungselemente mit dem fluidleitungsinternen Verbindungsteil und dem fluidleitungsexternen Verbindungsteil wird vorzugsweise sowohl der Schweißkopf und/oder die Schweiß-Elektrode und/oder die Klebedüse durch die Ausnehmung im Verbindungsstück eingeführt als auch der Schweißkopf und/oder die Schweiß-Elektrode und/oder die Klebedüse radial, axial oder schräg von außen auf das Verbindungsstück gerichtet und/oder bewegt.

Nachfolgend werden bevorzugte Ausführungsformen der Erfindung unter Bezugnahme auf die beiliegenden Figuren näher erläutert und beschrieben. Dabei zeigen:
- Fig. 1: eine Explosionsdarstellung der Fluidleitungsvorrichtung vor dem Zusammensetzen der Fluidleitung und des Verbindungsstücks in einer seitlichen Schnittdarstellung;
- Fig. 2: die Fluidleitungsvorrichtung im zusammengesetzten und nicht gefügten Zustand in einer seitlichen Schnittdarstellung;
- Fig. 3: die erfindungsgemäße Fluidleitungsvorrichtung im verpressten und stoffschlüssig gefügten Zustand in einer seitlichen Schnittdarstellung; und
- Fig. 4: ein Ausführungsbeispiel eines Verbindungsstücks mit Anschlussstück in einer seitlichen Schnittdarstellung.

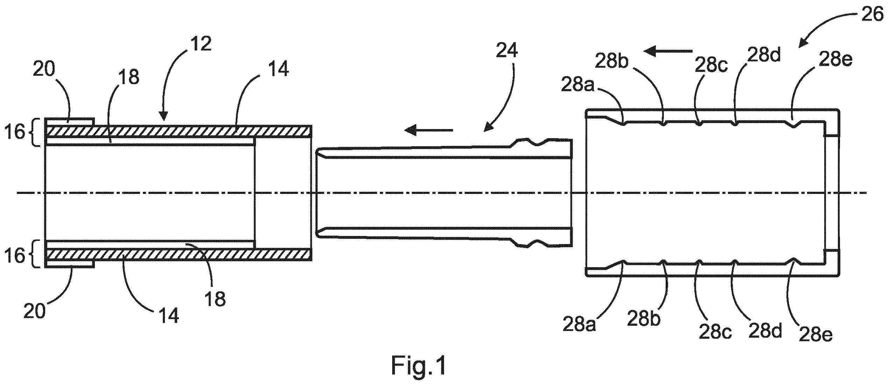

Die Fig. 1 zeigt eine Fluidleitung 12, ein fluidleitungsinternes Verbindungsteil 24 und ein fluidleitungsexternes Verbindungsteil 26 in einer Schnittdarstellung.

Die Fluidleitung 12 ist als Schlauchleitung ausgebildet und umfasst einen Leitungsmantel 16, welcher wiederum eine fluidleitungsinnere Mantelschicht 18, eine fluidleitungsäußere Mantelschicht 20 und in Axialrichtung verlaufende Verstärkungselemente 14 umfasst. Die fluidleitungsinnere Mantelschicht 18 und die fluidleitungsäußere Mantelschicht 20 der als Schlauchleitung ausgebildeten Fluidleitung 12 bestehen beispielsweise aus einem Elastomer und sind abschnittsweise entfernt, sodass die Verstärkungselemente 14 abschnittsweise auf der Außenseite der Fluidleitung 12 oder auf der Innenseite und Außenseite der Fluidleitung 12 freiliegen. Die Verstärkungselemente 14 sind beispielsweise als Drahtgeflecht aus Stahldrähten ausgebildet.

Das fluidleitungsinterne Verbindungsteil ist als Nippel ausgebildet und ist dazu eingerichtet, axial in die als Schlauch ausgebildete Fluidleitung 12 eingeführt zu werden. Das fluidleitungsexterne Verbindungsteil 26 ist als Fassung ausgebildet und dazu eingerichtet, axial über die Fluidleitung 12 und das darin eingeführte fluidleitungsinterne Verbindungsteil 24 geschoben zu werden. Das als Fassung ausgebildete fluidleitungsexterne Verbindungsteil 26 umfasst radial innenliegende und axial voneinander beabstandete Verpressglieder 28a-28f, welche als sich in Radialrichtung erstreckende zahnartige und umlaufende Erhebungen ausgebildet sind.

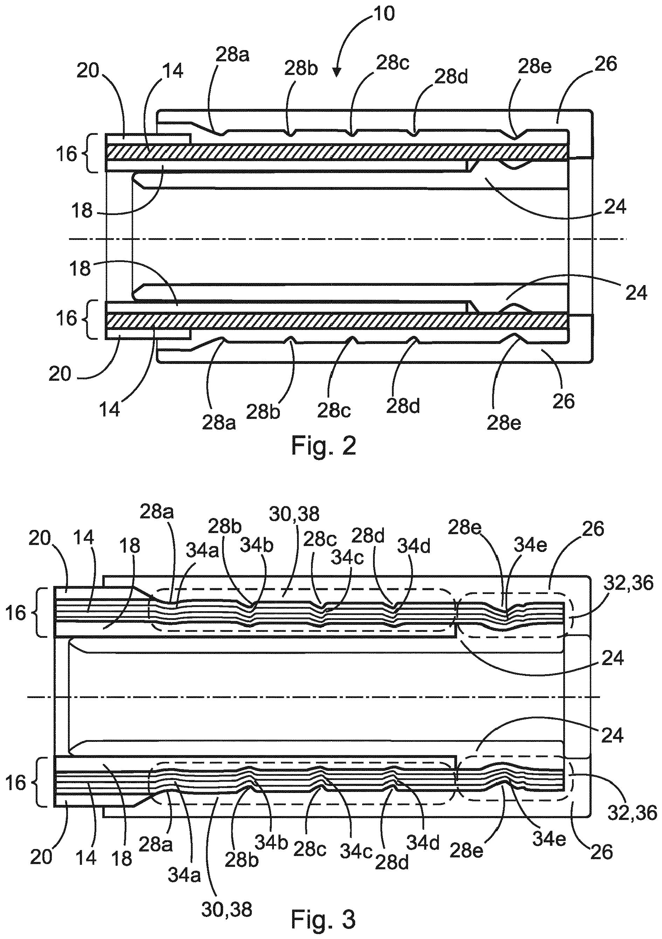

In Fig. 2 ist eine Fluidleitungsvorrichtung 10, umfassend die Fluidleitung 12, das fluidleitungsinterne Verbindungsteil 24 und das fluidleitungsexterne Verbindungsteil 26 aus Fig. 1, in einer Schnittansicht dargestellt. Das als Nippel ausgebildete fluidleitungsinterne Verbindungsteil 24 ist vollständig axial in die Fluidleitung 12 eingeführt. Das als Fassung ausgebildete fluidleitungsexterne Verbindungsteil 26 ist vollständig axial über die Fluidleitung 12 geschoben.

Die Fig. 3 zeigt die Fluidleitungsvorrichtung 10, wobei das fluidleitungsexterne Verbindungsteil 26 in einem Dichtabschnitt 30 mittels einer Pressverbindung 38 über die Verstärkungselemente 14 und die fluidleitungsinnere Mantelschicht mit dem fluidleitungsinternen Verbindungsteil verpresst ist. In einem Dichtabschnitt 30 drücken die Verpressglieder 28a-28d auf die Verstärkungselemente 14 der Fluidleitung 12, sodass bereichsweise Deformationen 34a-34d im Dichtabschnitt hervorgerufen werden. Durch die Deformationen 34a-34d wird wiederum Druck auf die fluidleitungsinnere Mantelschicht 18 ausgeübt, sodass die fluidleitungsinnere Mantelschicht abdichtend mit dem fluidleitungsinternen Verbindungsteil verpresst ist. Im Dichtabschnitt 30 ist die fluidleitungsäußere Mantelschicht 20 entfernt, sodass die Verstärkungselemente 28a-28d direkten Kontakt zu den Verstärkungselementen 14 haben. In einem Fügebereich 32 sind die Verstärkungselemente 14 mit dem fluidleitungsinternen Verbindungsteil 24 und dem fluidleitungsexternen Verbindungsteil 26 mittels einer Fügeverbindung 36 stoffschlüssig gefügt. Die Fügeverbindung 36 ist eine Schweißverbindung. In diesem Anwendungsbeispiel umfasst das fluidleitungsexterne Verbindungsteil 26 ein weiteres Verpressglied 28e, mittels welchem im Fügebereich 32 eine zusätzliche Deformation 34e der Verstärkungselemente 14 realisiert wird. Im Fügebereich 32 sind sowohl die fluidleitungsinnere Mantelschicht 18 als auch die fluidleitungsäußere Mantelschicht 20 vollständig entfernt.

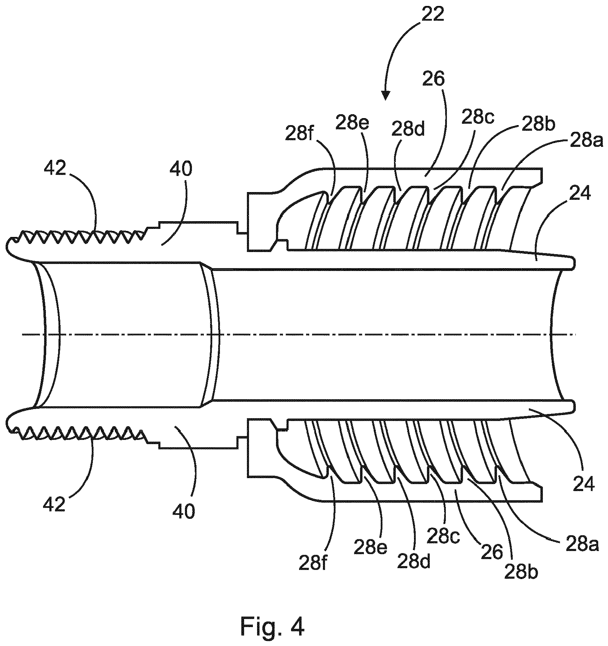

Die Fig. 4 zeigt ein rotationssymmetrisches Verbindungsstück 22 umfassend ein als Fassung ausgebildetes fluidleitungsexterne Verbindungsteil 26 mit Verpressgliedern 28a-28f und ein als Nippel ausgebildetes fluidleitungsinternes Verbindungsteil 24 in einer Schnittansicht. Zudem umfasst das Verbindungsstück 22 ein Anschlussstück 40 mit einem Gewinde 42, mittels welchem Anbau- und Zubehörteile an dem Verbindungsstück montierbar sind. Das Anschlussstück 40 ist fest mit dem fluidleitungsinterne Verbindungsteil 24 verbunden.

### Bezugszeichenliste

- 10: Fluidleitungsvorrichtung
- 12: Fluidleitung
- 14: Verstärkungselemente
- 16: Leitungsmantel
- 18: fluidleitungsinneren Mantelschicht
- 20: fluidleitungsäußeren Mantelschicht
- 22: Verbindungsstück
- 24: fluidleitungsinternes Verbindungsteil
- 26: fluidleitungsexternes Verbindungsteil
- 28a-28f: Verpressglieder
- 30: Dichtabschnitt
- 32: Fügebereich
- 34a-34e: Deformation
- 36: Fügeverbindung
- 38: Pressverbindung
- 40: Anschlussstück
- 42: Gewinde

## Patentansprüche

1. Fluidleitungsvorrichtung (10), mit
- einer Fluidleitung (12), welche sich in Axialrichtung erstreckende Verstärkungselemente (14) und einen Leitungsmantel (16) umfasst; und
- zumindest einem mehrteiligen Verbindungsstück (22), welches ein fluidleitungsinternes Verbindungsteil (24) und ein fluidleitungsexternes Verbindungsteil (26) umfasst und das fluidleitungsexterne Verbindungsteil (26) mehrere in Axialrichtung voneinander beabstandet angeordnete Verpressglieder (28a-28f) aufweist;
wobei der Leitungsmantel (16) der Fluidleitung (12) in einem Dichtabschnitt (30) der Fluidleitungsvorrichtung (10) über die auf die Verstärkungselemente (14) Druck ausübenden Verpressglieder (28a-28f) mittels einer Pressverbindung (38) mit dem fluidleitungsinternen Verbindungsteil (24) abdichtend verpresst ist; **dadurch gekennzeichnet, dass** die Verstärkungselemente (14) in einem Fügebereich (32) der Fluidleitung (12) mittels einer Fügeverbindung (36) stoffschlüssig mit dem zumindest einen Verbindungsstück (22) gefügt sind.

2. Fluidleitungsvorrichtung nach Anspruch 1,
**dadurch gekennzeichnet, dass** die Verstärkungselemente (14) aus einem schweißbaren Werkstoff ausgebildet sind und die Fügeverbindung (36) eine Schweißverbindung ist.

3. Fluidleitungsvorrichtung nach einem der Ansprüche 1 oder 2,
**dadurch gekennzeichnet, dass** die Verstärkungselemente (14) aus Fasermaterial und/oder aus textilem Material oder aus Kunststoff ausgebildet sind und die Fügeverbindung (36) eine Klebeverbindung ist.

4. Fluidleitungsvorrichtung nach einem der vorstehenden Ansprüche,
**dadurch gekennzeichnet, dass** die Fügeverbindung (36) mehrere voneinander beabstandete und über den Umfang der Fluidleitung verteilte Fügepunkte umfasst.

5. Fluidleitungsvorrichtung nach einem der vorstehenden Ansprüche,
**dadurch gekennzeichnet, dass** das fluidleitungsexterne Verbindungsteil (26) zumindest ein Verpressglied (28a-28f) im Fügebereich (32) der Fluidleitungsvorrichtung (10) aufweist, sodass im Fügebereich (32) der Fluidleitungsvorrichtung (10) gleichzeitig eine kraftschlüssige Pressverbindung (38) und eine stoffschlüssige Verbindung vorliegt.

6. Hochdrucktanksystem, mit
- einem Vorratsbehälter für ein Tankfluid,
- einem Zapfventil, welches mit einem Fluidtank eines Fahrzeugs verbindbar ist; und
- einer Fluidleitungsvorrichtung (10), mittels welcher der Vorratsbehälter und das Zapfventil fluidleitend miteinander verbunden sind,
**dadurch gekennzeichnet, dass** die Fluidleitungsvorrichtung (10) nach einem der vorstehenden Ansprüche ausgebildet ist.

7. Verfahren zum Herstellen einer eine Fluidleitung (12) und zumindest ein mehrteiliges Verbindungsstück (22) umfassenden Fluidleitungsvorrichtung (10), insbesondere einer Fluidleitungsvorrichtung (10) nach einem der Ansprüche 1 bis 5, mit dem Schritt:
- Verpressen eines Leitungsmantels (16) der Fluidleitung (12) in einem Dichtabschnitt (30) über auf Verstärkungselemente (14) der Fluidleitung (12) Druck ausübende und in Axialrichtung voneinander beabstandete Verpressglieder (28a-28f) eines fluidleitungsexternen Verbindungsteils (26) des Verbindungsstücks (22) mit einem fluidleitungsinternen Verbindungsteil (24) des Verbindungsstücks (22);
**gekennzeichnet durch** den Schritt:
- stoffschlüssiges Fügen von sich in Axialrichtung erstreckenden Verstärkungselementen (14) der Fluidleitung (12) in einem Fügebereich (32) mit dem zumindest einen Verbindungsstück (22).

8. Verfahren nach Anspruch 7,
**dadurch gekennzeichnet, dass** das Verpressen des Leitungsmantels (16) der Fluidleitung (12) mit dem fluidleitungsinternen Verbindungsteil (24) und das stoffschlüssige Fügen der Verstärkungselemente (14) mit dem Verbindungsstück (22) zeitgleich oder nacheinander durchgeführt wird.

9. Verfahren nach einem der Ansprüche 7 oder 8,
**dadurch gekennzeichnet, dass** das stoffschlüssige Fügen mittels Schweißen und/oder Kleben erfolgt.

10. Verfahren nach einem der Ansprüche 7 bis 9,
**dadurch gekennzeichnet, dass** die Verstärkungselemente (14) der Fluidleitung (12) beim stoffschlüssigen Fügen der Verstärkungselemente (14) mit dem Verbindungsstück (22) mit dem fluidleitungsinternen Verbindungsteil (24) und/oder mit dem fluidleitungsexternen Verbindungsteil (26) stoffschlüssig verbunden werden.
